# EUROPEAN PATENT APPLICATION

(11) **EP 2 698 976 A1**
(43) Date of publication of application: **19.02.2014**
(21) Application number: 13492002.4
(22) Date of filing: 30.07.2013
(51) Int. Cl.: H04M 11/02, H04M 1/02, G08B 13/08, E05B 47/00

(54) **An electronic device for recording and recognizing ring signal patterns in an intercom device sending a signal to unlock the door based on the recognition**

(30) Priority: 13.08.2012 RS P20120345
(71) Applicant: TRK Inovacije Doo Novi Sad, 21000 Novi Sad (RS)
(72) Inventor: Orlovic, Dusan, B., 21000 Novi Sad (RS); Crnokrak, Dimitrije, 25263 Prigrevica, RS (RS)

(57) **Abstract**

An electronic device for recording and recognition of the ring signal timestamps in the intercom device that sends a signal to unlock the door based on the recognition, is used for household members and other visitors to quickly unlocks the front door with intercom, without need to use a key or someone answers the intercom call. The present invention is connected to an existing intercom device in apartment and uses an existing ring button for the corresponding apartment on intercom calling panel, to recognize ring sequence and also, to record a new secret sequence, in which case intercom handset in the apartment should be lifted (call in progress).

## Description

### a) Field of technology

The present invention relates to a device that connects to an existing intercom device in apartments, houses, offices. It is used to automatically unlock the intercom front door. Field of technology by the International Classification H04M11/02B

### b) A technical problem

About fifteen years ago has started mass installation of intercom system in buildings. Now the situation is that the buildings are locked for the visitors but also for the residents who live in them. Anyone who wants to enter must stop to unlock the door. To enter without a key, a visitor need to press the intercom bell and wait for someone to answer the call and unlock the door. With help of this invention, this is a sufficient step, ie. it is not necessary that someone in the apartment answers the call, examine the person in question and eventually press the button to unlock the door.

This invention listens for duration of key presses, and if it recognizes a secret signal sequence it sends a signal to unlock the door.

The contributions of this kind of entry are:
- The user can reduce the number of keys that carries
- Saving entrance time because the door can be automatically unlocked as soon as the ring ends
- People in the apartment do not need any effort to get up, talk and unlock

Alternative solutions such as a door panel with a numeric keypad has many disadvantages. Numeric keypad on the door panel is used for entering four-digit secret code that unlocks the door. First downside is when a user is pressing the numeric keypad, secret code can be easily spied by a person standing nearby. Second, since the door panel is common to all apartments, there is no signage in case of an error code and someone can try a lot of combinations since no one notices him. Third, since the code is unique for entire building, it usually does not change over time because every tenant has to be informed for a new code. For this reasons, the secret code becomes widely known.

The present invention has the advantage that it can be harder to spy on by person standing nearby because it is a time-coded ring pressing. Second, any failure attempt is evident because every abuse is signaled in an apartment on each attempt. Third, since the invention applies only to the individual household, secret ring signal can easily be changed without need to inform all neighbours.

One especially good feature is lack of transparency ie. another visitor can not determine whether the man or the device unlocked the door. This way burglar can not know which of the ring buttons on calling table can use to unlock the door with a secret key pressing. And in the case he find out, any attempt to enter the secret code (correctly or incorrectly) is signaled in the apartment.

This feature arises from the fact that present invention is mounted on existing intercom appliances in apartments and there is no external appearance of it. There are many different models of intercom systems (with a different number of wires that connects the apartment unit and central unit) and for the example of two wires interconnections (patents DE2156517 i DE2547188) the signal for unlocking the door is shorting that two wires. The present invention solves the problem of the construction of electronic devices capable of recording and recognition of arbitrary sequences ringtones and send a signal to unlock the door, without any modification of exterior of intercom system.

### c) State of the art

The existing patent relating to the present invention is DE10127029 "Doorbell and security entry device for apartment building has switching device controlled by input of Morse code via doorbell line for operation of door opener" in 2002. The patent relates to an intercom system by comparing its signal tones and preset Morse codes. The present invention has a number of important different characteristics compared to an existing patent, such as:
1. present invention relates to a device that connects to an existing intercom systems, allowing easy installation and accessibility in existing systems.
2. present invention detects arbitrary ring intervals. It is not necessary, as in the case of Morse code, to be certain relation of duration of long (DASH) and short (DIT) signals. Such an improvement is possible as the microcontroller records start and end of each signal in microseconds (for example, 0, 250, 594, 1243, 1540, 1800 ms, corresponding to a Morse code: dit-pause-dash-pause-dit-pause where a dit is 250ms, pause is 250ms and dash is three times longer 750ms. The timestamps, numbers: 250, 594, ... can be stored in permanent EEPROM memory so that they remain stored in the event of power outages. As the amount of information, which should be stored in the EEPROM memory, is very small, practically there is no limit on the length and number of pushes in the ring sequence. It is also possible to select recognition accuracy (eg 100ms precision) so that, for example elders do not need to be so precise while typing a secret code. In the aforementioned patent from 2002 the recognition algorithm starts after a certain idle time (no ring signal) and then analyzes the long and short sequences. The present invention uses a recognition algorithm which ends as soon as there is a difference of more than recognition precision (for example 100ms). In this way, for the ring signal that lasts for eg. 10 minutes it will not wait 10 minutes for analysis, but recognition stops as soon as disagreement happens (for example at 250ms+100ms = 350 ms).
3. recording a secret sequence is done by using a ring button on the intercom call panel. This way, when the same button is used for recording and recognizing secret code, ring button's deficiencies (response time, debounce, quality, way of pressing) are reduced compared to when separated keys are used for recording and recognizing.
4. for the two-wires system (which is the most commonly used) signal to unlock the door is shorting (only) two wires in intercom device (that shorting is done when the user presses the door unlock button) and then the intercom device in apartment is completely without power. The problem, how to do electronic short circuit without using an external power supply, was solved by using a power source like a battery or capacitor with a capacity of 0.1F to 1F (goldcap) from which it can draw power for the relay while holding short for about ten seconds (which a sufficient period of time to a visitor arrives to open the door).
5. present invention does not change the external appearance of intercom system, ie. does not add any additional buttons or signal lamps. To record a new secret sequence the user uses existing button on an intercom call panel. To determine whether it is in recognizing or recording state, present invention uses the information on whether the handset is lifted or not. This information is available in the intercom device in corresponding apartment where the present invention is installed.
   To avoid malicious entering a new secret sequence while the call is in progress (handset is lifted) there is a control delay of for example 1 min. The user can prevent malicious recording if he hungs up (put the handset back on the hook) during this 1 min protection period. After each completed recording (off-hook, pressing secret sequence and hook back in more that 1 min after the last press) a newly recorded sequence is played. A user can be reminded of the recorded sequence if he is holding off-hook more than for example 5 min.
6. to reduce the possibility of eavesdropping bells by neighbours, invention could uses a special relay that interrupts direct connection with the ring speaker, or the ring speaker is permanently disconnected and present invention has a bell to play a simple melody that will not reveal secret code. That way when someone rings the intercom panel, he can not hear the ring simultaneously on intercom phone in apartment.

### d) Disclosure of the invention

The present invention is an electronic device that connects to an existing intercom device in apartment without the need to change any part of the intercom system (amplifier, calling panel, door lock). The present invention takes a timestamps of the ring signal caused by ring button on the calling panel and compare it with a stored secret sequence. If there is enough matching, it sends unlock signal. Present invention records secret sequence using the same ring button on intercom calling panel, but intercom handset device in the apartment should be lifted (call in progress) and the ring button on calling panel pressed in desired way.

### e) description of the image

Figure 1 shows the connection point the present invention in two-wire intercom systems
Figure 2 is one example implementation in two-wire intercom systems

### f) a detailed description of the invention (e)

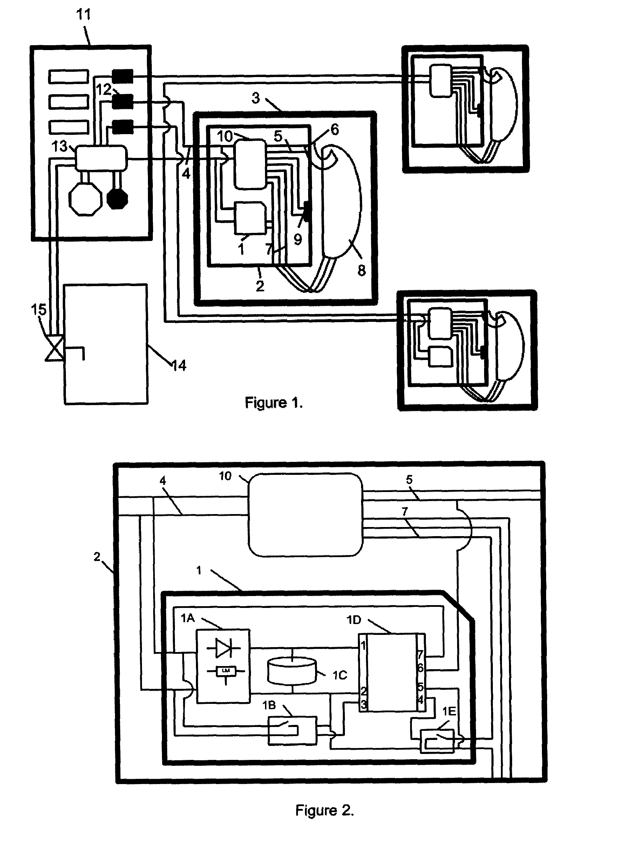

Figure 1 shows intercom system (model with two wires) and location of present invention 1 (a rectangle with one corner cut off) in intercom device 2 in a apartment 3. The present invention is connected to wires 4 inside the intercom device 2, through which listens for a ring signal of a ring button 12 and through which sends a signal to unlock the door locks 15 on the door 14. The user can continue unhindered use of an intercom device 2 and unlocking button 9. When user wants to change their secret sequence, than present invention 1 detect lifted handset 8 using wire 5 that connects main module 10 with switch 6 which detect lifted handset 8. In this way, when user picks up handset 8, ring signal ie it's interval timestamps are stored in EEPROM memory and later on used to verify signal identity.

One implementation of the present invention may look like Figure 2. This implementation consists of a module for a power source 1A, relay 1B to unlock the door lock 15, high-capacity capacitor 1C, microcontroller 1D and relay 1E to turn off ring speaker. Power source 1A can be created with Graetz rectifier and voltage regulator LM317. Relay 1B shorts wires 4 and then, since there is no power on wires 4, it takes power from capacitor 1C. Capacitor 1C is the order of 1 Farad which is enough energy to maintain relay closed and time for visitor to open the door (about ten seconds). Instead of capacitors rechargeable batteries can be used, but they are prone to leakage and lasting less than capacitor. Microcontroller 1D has EEPROM memory, has two inputs (6 and 7), three outputs (3, 4 and 5) and takes power on inputs 1 and 2 from power source 1A. Output 3 is used to activate the relay 1B to unlock the door lock 15, output 4 is used to activate the relay 1E to turn off the ring speaker, output 5 is used for sending a signal to the speaker for custom ring tones, input 6 is used to detect a lifted handset and input 7 is used to detect the ring signal. Because of the difference in voltage, input 6 and 7 of the microcontroller 1D can be adapted with TL431.

## Claims

1. An electronic device for recording and recognition of the ring signal timestamps in the intercom device that sends a signal to unlock the door based on the recognition (1), is installed in an existing intercom device (2) in apartment (3) without having to change any other part of the intercom system: amplifier (13), calling panel (11) or lock system (15) and consist of a module for a power source (1A), a relay (1B) for unlocking and microcontroller (1D) that listens for ring signal from ring button (12) **characterized in that** the recording secret sequence is done using the same ring button (12) as in the usual ringing, but in case of recording, handset (8) should be lifted (call in progress state) which microcontroller (1D) detects in wires (5) that connects to switch (6) on which headset (8) is placed.

2. A device according to claim 1 **characterized in that** there is no limit on the duration and number of ring signals as well as the level of recognition precision.

3. A device according to claim 1 **characterized in that** the power supply is not used outside of the intercom system.

4. A device according to claim 3 when connected to a two-wire intercom system **characterized in that** it uses element for the energy storage (1C) from which it receives power while keeping short-circuit the only two wires (4) to which the intercom device (2) is connected (which is actually a signal to unlock the door lock).

5. A device according to claim 1 **characterized in that** it consists relay (1E) that disconnects ring speaker so pressing the ring button does not simultaneously cause ring sound on intercom device, but it is signalled after verifying identity with secret sequence, using wire (7) that connects to handset (8).
